# EUROPEAN PATENT APPLICATION

(11) **EP 4 852 531 A1**
(43) Date of publication of application: **09.12.2026**
(21) Application number: 25180363.1
(22) Date of filing: 03.06.2025
(51) Int. Cl.: H04W 52/02

(54) **INDICATION OF ACTIVATING A SUBSET OF CELL DISCONTINUOUS TRANSMISSION AND/OR DISCONTINUOUS RECEPTION PATTERNS**

(71) Applicant: Nokia Technologies Oy, 02610 Espoo (FI)
(72) Inventor: AZARI, Mahdi, Massy (FR); KHLASS, Ahlem, Massy (FR)
(74) Representative: Nokia EPO representatives

(57) **Abstract**

Disclosed is a method comprising: receiving, by a user equipment from a network node, information for time domain synchronization with the network node in association with cell discontinuous transmission/discontinuous reception (DTX/DRX) pattern activation; receiving, from the network node, an indication of activating a subset of cell discontinuous transmission and/or discontinuous reception (DTX/DRX) patterns among a plurality of cell discontinuous transmission and/or discontinuous reception (DTX/DRX) patterns; and carrying out adaptation to the patterns in the subset according to the indication, wherein one or more activation periods of at least one pattern in the subset are monitored using the information for time domain synchronization.

## Description

### FIELD

The following example embodiments relate to wireless communication.

### BACKGROUND

As energy resources are limited, it is desirable to improve the energy efficiency of wireless communication networks.

### SUMMARY

According to some aspects, there is provided the subject matter of the independent claims. Some further aspects are defined in the dependent claims.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2A illustrates an example of a pattern for cell discontinuous transmission and/or discontinuous reception;
FIG. 2B illustrates an example of multiple patterns for cell discontinuous transmission and/or discontinuous reception;
FIG. 2C illustrates an example of indicating pattern switching for cell discontinuous transmission and/or discontinuous reception;
FIG. 2D illustrates an example of activating multiple patterns in a row for cell discontinuous transmission and/or discontinuous reception;
FIG. 2E illustrates an example of a fallback mechanism for switching to another pattern in case of performance degradation;
FIG. 3 illustrates a flow chart;
FIG. 4 illustrates a flow chart;
FIG. 5 illustrates a signal flow diagram;
FIG. 6 illustrates an example of a machine learning model;
FIG. 7 illustrates an example of a reinforcement learning model;
FIG. 8 illustrates a flow chart;
FIG. 9 illustrates an example of an apparatus; and
FIG. 10 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Further, it should be appreciated that, as used herein, the terms "the at least one" and "the one or more" mean "any one of the at least one" and "any one of the one or more", respectively. Furthermore, as used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, for the purposes of the present disclosure, the phrases "at least one of A or B", "at least one of A and B", or "A and/or B" means (A) or (B), or (A and B).

Some example embodiments described herein may be implemented in a wireless communication network comprising a radio access network based on one or more of the following radio access technologies (RATs): long term evolution (LTE), LTE-Advanced, fourth generation (4G), fifth generation (5G), 5G new radio (NR), 5G-Advanced (i.e., 3GPP NR Rel-18 and beyond), sixth generation (6G), or seventh generation (7G). Some examples of radio access networks include the evolved universal terrestrial radio access network (E-UTRA), or the next generation radio access network (NG-RAN).

It should be noted that the embodiments are not restricted to the wireless communication network given as an example, but they may also be applied to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

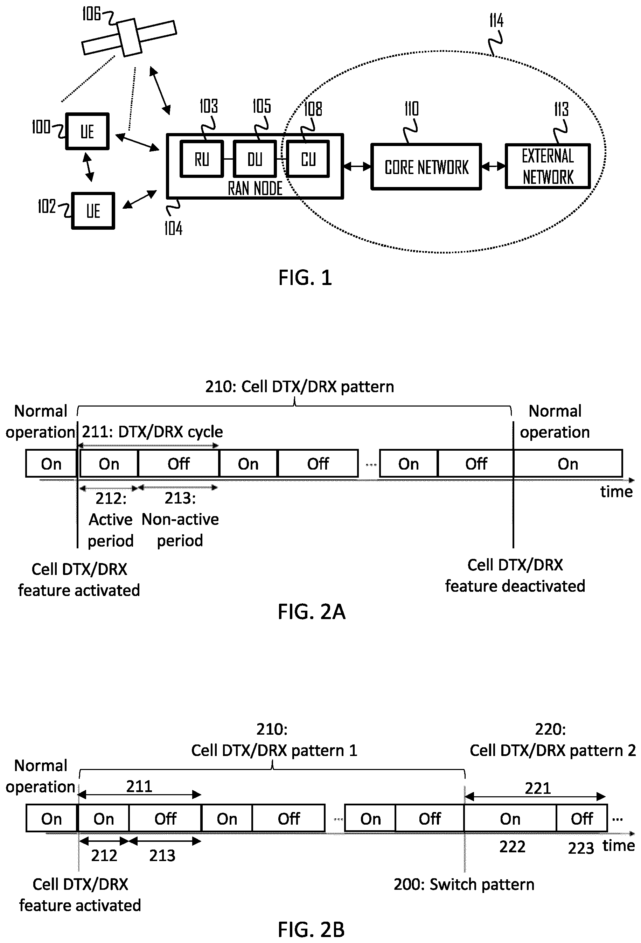

FIG. 1 depicts an example of a simplified wireless communication network showing some physical and logical entities. The connections shown in FIG. 1 may be physical connections or logical connections. The wireless communication network may also comprise other physical and logical entities than those shown in FIG. 1.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, a RAN node, or a network device.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW) for routing and forwarding data packets, a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a household appliance with radio parts, a sensor comprising a wireless modem, or a computing device comprising a wireless modem integrated in a vehicle or in a house.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, or low earth orbit (LEO) satellite systems, such as mega-constellations (i.e., systems in which hundreds of (nano)satellites are deployed). Alternatively, the satellites may be airborne devices, such as an unmanned aerial vehicle (UAV), or a high-altitude platform system (HAPS). A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

Cell discontinuous transmission (DTX) is a mechanism where an access node 104 controlling a cell may turn off, partially or completely, the transmissions of (downlink) data, control signaling, and/or reference signals on the cell during one or more non-active periods to save energy. In other words, the transmission activities on the cell are impacted during the one or more non-active periods. However, it should be noted that not all of the transmissions on the cell are necessarily stopped during the one or more non-active periods. For example, some control signaling and/or reference signals may still be transmitted on the cell during the one or more non-active periods (in case the transmissions are partially turned off).

Cell discontinuous reception (DRX) is a mechanism where the access node 104 controlling the cell may turn off, partially or completely, the reception of (uplink) data and/or reference signals on the cell during one or more non-active periods to save energy. In other words, the reception activities on the cell are impacted during the one or more non-active periods. However, some signaling may still be received during the one or more non-active periods (in case the reception is partially turned off).

Cell DTX and cell DRX may be applied separately or together. For example, the access node 104 may apply cell DTX to reduce downlink transmissions (e.g., muting reference signals during idle times), while keeping reception of uplink transmission always on. Conversely, the access node 104 may enable cell DRX to reduce the cell's reception activity, while continuing to transmit. On the other hand, when both cell DTX and cell DRX are applied together, the cell alternates between active and non-active periods for both transmission and reception.

In other words, cell DTX/DRX is a network energy saving (NES) feature, which allows an access node 104 (e.g., gNB) to turn off, partially or completely, transmission and/or reception for user data traffic, control signaling, and/or reference signals during cell DTX/DRX non-active periods. The access node 104 may enter a sleep state (i.e., a low-power mode with reduced power consumption) and thereby save energy during these non-active periods. The access node 104 may configure one or more UEs 100, 102 with the periodic cell DTX/DRX pattern for example via RRC signaling, and indicate the activation of the pattern for example via RRC or L1 signaling (to synchronize the communication between the one or more UEs 100, 102 and the access node 104 accordingly).

Herein the terms "cell DTX/DRX" and "cell DTX and/or DRX" mean at least one of cell DTX or cell DRX. For example, the cell DTX/DRX pattern (or cell DTX and/or DRX pattern) may comprise a pattern for at least one of cell DTX or cell DRX.

FIG. 2A illustrates an example of a cell DTX/DRX pattern 210 (e.g., in 5G NR Release 18). The cell DTX/DRX pattern 210 (or a configuration of the cell DTX/DRX pattern 210) may define at least one of: a cell DTX/DRX active period (or on-duration) 212, a cell DTX/DRX non-active period (or off-duration) 213, or a duration of a cell DTX/DRX cycle 211. The duration of the cell DTX/DRX cycle 211 may be equal to the sum of the duration of the active period 212 and the duration of the non-active period 213. The cell DTX/DRX pattern 210 (or its configuration) may further define a cell DTX/DRX offset, which is a point in time when the cell DTX/DRX pattern 210 is activated (i.e., when the pattern 210 starts). In FIG. 2A, the "normal operation" refers to an operation mode of the access node 104, where the cell DTX/DRX feature is deactivated.

During the active period 212, the access node 104 is capable of transmitting and/or receiving data signaling, control signaling, and one or more reference signals.

During the non-active period 213, the transmission and/or reception capability of the access node 104 is impacted (e.g., turned off partially or completely). For example, the access node 104 may not transmit and/or receive data signaling, control signaling, and/or reference signals during the non-active period 213. In other words, during the non-active period 213, the access node 104 may temporarily cease at least some transmission and/or reception activities.

The cell DTX/DRX cycle 211 indicates a periodicity with which the active period 212 and the non-active period 213 repeat. For example, the duration of the cell DTX/DRX cycle 211 may be in the order of tens of milliseconds up to a few hundred milliseconds. In other words, when operating with cell DTX/DRX, the access node 104 may follow a periodic pattern of active periods 212 and non-active periods 213.

FIG. 2B illustrates a potential enhancement of the cell DTX/DRX feature (e.g., possibly to be applied in 6G), where multiple (two or more) different cell DTX/DRX patterns 210, 220 may be configured, and the access node 104 may switch 200 from one pattern 210 to another 220 based on the network load and/or traffic profiles, for example. The cell DTX/DRX patterns 210, 220 may be different in terms of at least one of: the duration of the active period 212, 222, the duration of the non-active period 213, 223, or the duration of the cell DTX/DRX cycle 211, 221. The switching 200 may be dynamic to capture the variation of the network load and/or data traffic. The access node 104 may signal or indicate the switching 200 to one or more UEs 100, 102 using L1 signaling, for example (e.g., with a modified version of the downlink control information (DCI) format 2_9).

When multiple cell DTX/DRX patterns (e.g., N patterns) are configured, the patterns should be dynamically activated to adapt to the changes in the network environment (e.g., to the variations of the traffic profile and its requirements). However, indicating the activation of each pattern separately to the UE(s) 100, 102 may cause high signaling overhead.

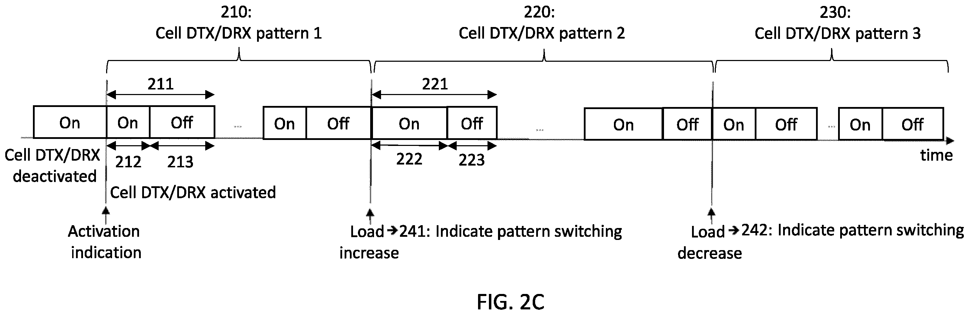

FIG. 2C illustrates an example of signaling overhead that may be caused by pattern switching in the multi-pattern cell DTX/DRX described above. The pattern switching illustrated in FIG. 2C may require signaling to the UE(s) 100, 102 (e.g., in an updated version of the DCI format 2_9) to indicate 241, 242 each pattern switching to the UE(s) 100, 102.

In other words, the activation and subsequent switching between patterns, when multiple (N>1) cell DTX/DRX patterns 210, 220, 230 are configured, may increase the signaling overhead, as the traffic varies more rapidly and frequently. In this case, the pattern switching may become more frequent to find a suitable cell DTX/DRX pattern. This signaling overhead may result in increased power consumption at the access node 104 from the frequent signaling, and at the UE(s) 100, 102 from frequent monitoring (which is not desirable).

Some example embodiments may provide a pattern switching technique that enables the activation of multiple cell DTX/DRX patterns in a determined sequence without having to explicitly signal the pattern switching to the UE(s) for each individual pattern.

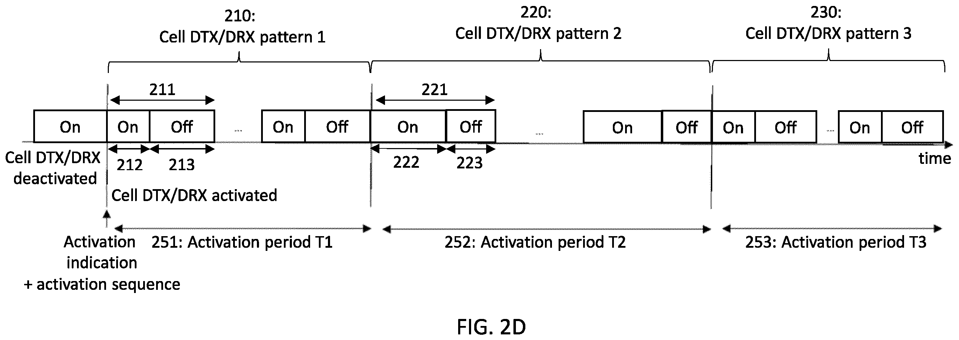

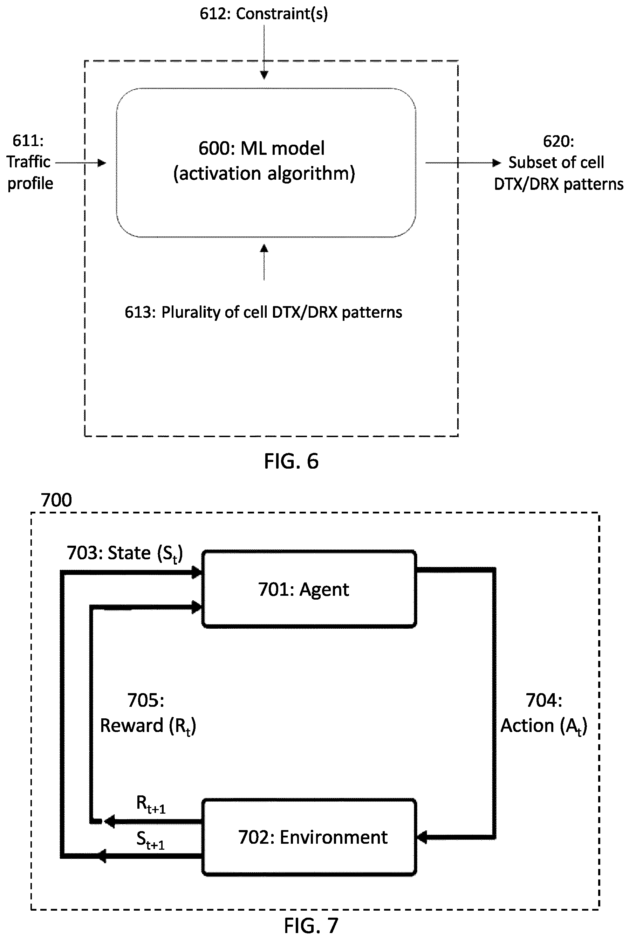

FIG. 2D illustrates an example of activating multiple cell DTX and/or DRX patterns in a sequence. For example, a machine learning (ML) model (e.g., see FIG. 6) may be used to determine a sequence or subset of cell DTX and/or DRX patterns to be activated consecutively from a plurality of N pre-configured cell DTX and/or DRX patterns. This sequence or subset may be indicated to the UE in a single DCI message or signaling (e.g., using an updated version of DCI 2_9). The size of the subset (i.e., the number of cell DTX and/or DRX patterns in the subset) may be denoted as K herein.

In FIG. 2D, the patterns 210, 220, 230 and their corresponding time of activation may be the output of the ML model (i.e., the ML model may output the subset or sequence of patterns). Accordingly, the pattern switching can be done so that the UE and the network are synchronized without having to separately indicate each pattern switching to the UE. The UE may use at least one local timer to measure the time duration (activation period) 251, 252, 253 of each pattern in order to adapt to the next pattern at the right time (i.e., when the network activates the next pattern). The activation periods 251, 252, 253 refer to the length of time (or time duration) during which a given cell DTX and/or DRX pattern remains activated (not to be confused with the active period 211, 222, which is just a part of a given activation period 251, 252).

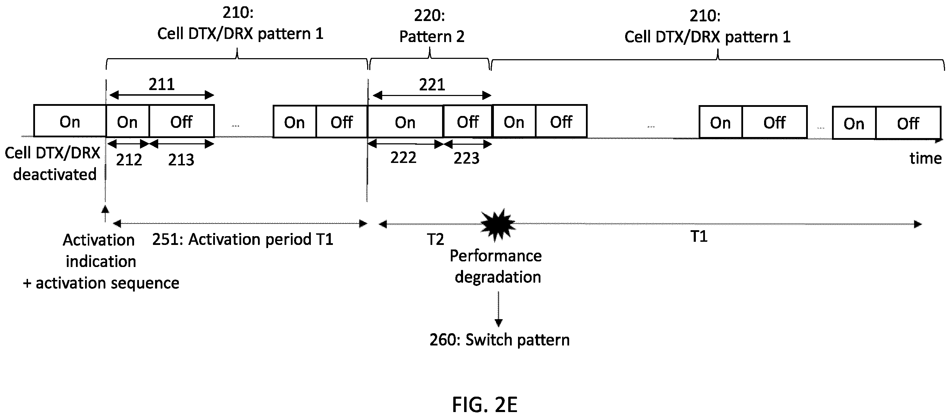

FIG. 2E illustrates an example of pattern switching with a fallback mechanism. If the subset or sequence of cell DTX and/or DRX patterns is not satisfactory in terms of performance (or degrading the performance of the UE and/or the network), or if the UE does not support the ML-based pattern switching, then the UE and the network may switch to a different cell DTX and/or DRX pattern at 260. For example, the network may indicate the switch to the different pattern via DCI signaling, and to disable the ML-based pattern switching. Alternatively, the cell DTX and/or DRX feature may be deactivated completely.

Some example embodiments are described below using principles and terminology of 5G radio access technology without limiting the example embodiments to 5G radio access technology, however. For example, some example embodiments may also be applied in 6G and beyond.

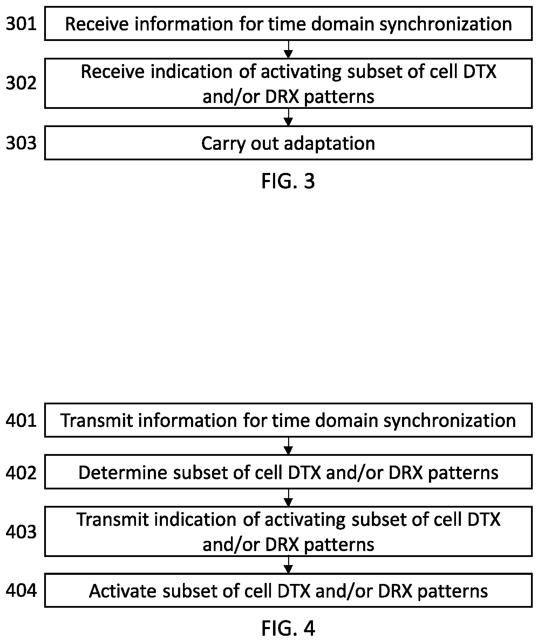

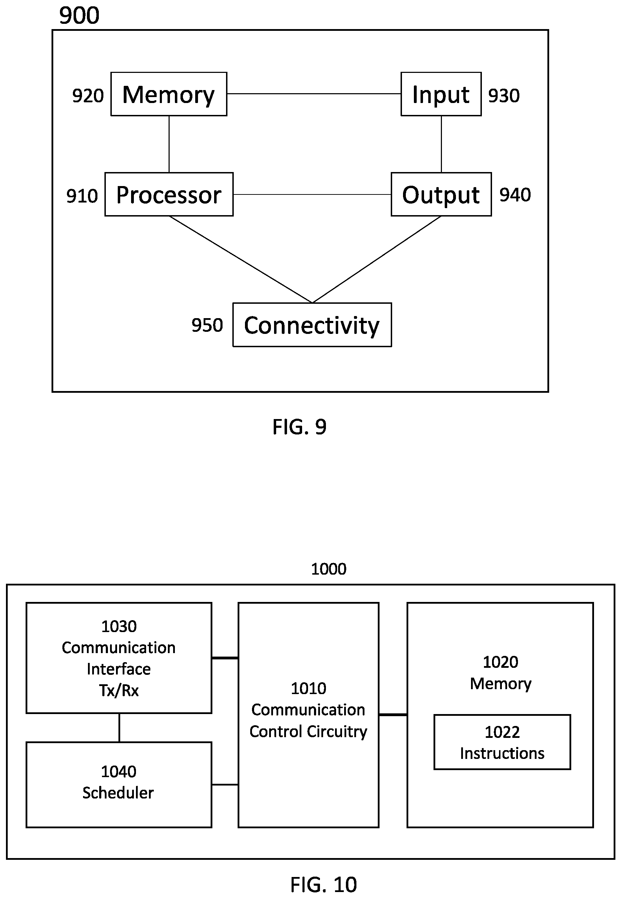

FIG. 3 illustrates a flow chart of a method. The method may be performed by an apparatus 900 depicted in FIG. 9. For example, the method may be performed by a user equipment (UE) 100.

The apparatus 900 or the user equipment 100 may comprise means for causing the apparatus 900 or the user equipment 100 to perform the method. The means may comprise at least one processor 910; and at least one memory 920 storing instructions that, when executed by the at least one processor 910, cause the apparatus 900 at least to perform the method.

As another example, there may be provided a computer program or a computer-readable medium (e.g., a non-transitory computer-readable medium) comprising instructions which, when executed by the apparatus 900 or the user equipment 100, cause the apparatus 900 or the user equipment 100 to perform the method.

Referring to FIG. 3, in block 301, the user equipment 100 receives, from a network node (e.g., an access node 104 of a radio access network), information for time domain synchronization with the network node 104 in association with cell discontinuous transmission/discontinuous reception (DTX/DRX) pattern activation.

In other words, the user equipment 100 receives information for time domain synchronization, wherein the information for the time domain synchronization is associated with cell DTX and/or DRX pattern activation (e.g., associated with activating multiple cell DTX and/or DRX patterns consecutively in a sequence).

The information for time synchronization refers to information that enables the user equipment 100 to align its internal timing with the timing of the network node 104 with respect to the cell DTX/DRX pattern activation. This information ensures that the user equipment 100 can accurately track the activation periods 251, 252, 253 of the cell DTX and/or DRX patterns. For example, the information for time domain synchronization may indicate a base time window (denoted as T0) or start time to be used for the pattern activation.

In block 302, the user equipment 100 receives, from the network node 104, an indication of activating a subset of cell discontinuous transmission and/or discontinuous reception (DTX/DRX) patterns among a plurality of cell discontinuous transmission and/or discontinuous reception (DTX/DRX) patterns. For example, the indication may be received in a downlink control information (DCI) message.

The plurality of cell DTX and/or cell DRX patterns may be pre-configured at the user equipment 100. The subset may comprise two or more cell DTX and/or cell DRX patterns from the plurality of (pre-configured) cell DTX and/or cell DRX patterns. The indication may indicate a sequence or order in which the subset of patterns are to be activated consecutively, such that one pattern of the subset is active at a time.

The subset may comprise one or more instances of a given cell DTX and/or cell DRX pattern. In some cases, the subset may comprise multiple instances of at least one cell DTX and/or DRX pattern. In other words, the subset may include the at least one cell DTX and/or DRX pattern more than one time (i.e., the at least one pattern may be repeated at least once within the subset or sequence). As a nonlimiting example, the subset may comprise the following activation sequence of cell DTX and/or DRX patterns (comprising two instances of pattern 1): pattern 1, pattern 3, pattern 1, pattern 2 (i.e., pattern 1 is activated first, then pattern 3 is activated, then pattern 1 is activated again, and then pattern 2 is activated after the second instance of pattern 1, but patterns 2 and 3 are not repeated in this example). Alternatively, the subset may comprise only one instance of each cell DTX and/or DRX pattern.

In block 303, the user equipment 100 carries out adaptation to the patterns in the subset according to the indication, wherein one or more activation periods 251, 252, 253 of at least one pattern in the subset are monitored (by the user equipment 100) using the information for time domain synchronization.

For example, the adaptation may comprise adapting control signalling and/or data signalling with the network node 104 to active (ON) periods 212 of the network node 104 according to the indication (e.g., DCI that may indicate the activation sequence for activating multiple cell DTX and/or cell DRX patterns in a row).

In other words, the user equipment 100 may synchronize its communication (e.g., transmission and/or reception of data) with the network node 104 according to the information for time domain synchronization and the activation sequence of the patterns in the subset, such that the user equipment 100 adapts to the next pattern in the subset (or sequence) as it is activated at the network node 104.

The monitoring of the one or more activation periods 251, 252, 253 may further comprise monitoring a start time and/or a duration of the one or more activation periods 251, 252, 253 by utilizing at least one local timer adjusted by using the information for time domain synchronization. Based on the information for time domain synchronization and the indication, the user equipment 100 may determine when each activation period starts and ends.

For example, for the activation of multiple cell DTX/DRX patterns in a row (or sequence), the user equipment 100 may measure the duration of each pattern by using the at least one local timer to be synchronized with the network node 104 for the next pattern(s).

For example, the subset or the indication of activating the subset may indicate the duration of the one or more activation periods. In other words, the time duration (activation period) of each pattern in the subset may be indicated in the indication or in the subset.

The indication of activating the subset of cell discontinuous transmission and/or discontinuous reception (DTX/DRX) patterns may further comprise information on the one or more activation periods of the at least one pattern in the subset, or information on the one or more activation periods may be a part of a configuration of the plurality of cell discontinuous transmission and/or discontinuous reception (DTX/DRX) patterns received by the user equipment 100 (e.g., from the network node 104) prior to the receiving the indication of activating the subset. For example, the information on the one or more activation periods may indicate the start time and/or the duration of the one or more activation periods.

The information on the one or more activation periods may further comprise information on a repetition cycle duration of the subset of cell discontinuous transmission and/or discontinuous reception (DTX/DRX) patterns.

The repetition cycle duration refers to the total time span over which the subset or sequence of cell DTX and/or DRX patterns (e.g., pattern 1, pattern 2, pattern 3) is repeated before a new cell DTX and/or DRX pattern or sequence is activated. The repetition cycle duration may be pre-configured or dynamically indicated, and it ensures that both the network node 104 and the user equipment 100 remain synchronized during the switching of patterns without requiring additional signaling for each switch. It should be noted that the repetition cycle duration is not the same as the cell DTX/DRX cycle 211 (e.g., shown in FIG. 2D). The cell DTX/DRX cycle 211 relates to the internal timing within a single cell DTX/DRX pattern 210, whereas the repetition cycle duration relates to the repetition of multiple different cell DTX/DRX patterns in a row.

For example, the network node 104 may use one-bit DCI signaling to indicate the UE 100 to repeat the latest subset or sequence of cell DTX and/or DRX patterns. Alternatively, the UE 100 may be pre-configured with one or more repetition rules. For example, the one or more repetition rules may define that if the UE 100 does not receive any new indication of another pattern or subset of cell DTX and/or DRX patterns before the latest subset or sequence is completed (i.e., before the activation period of the last pattern in the subset has expired), then the UE 100 may repeat the latest subset or sequence until the UE 100 receives the new indication.

The method may further comprise carrying out radio resource management related measurements, and transmitting, to the network node 104, a message comprising information on the measurements for the network node 104 to monitor operation of the network (e.g., of a cell controlled by the network node 104) for defining a second subset of cell discontinuous transmission and/or discontinuous reception (DTX/DRX) patterns, wherein the message may be transmitted during a cell discontinuous reception active (ON) period 212 of at least one pattern 210 in the subset.

Alternatively, or additionally, the method may further comprise: receiving, from the network node 104, a pattern-associated indication of a switch to an indicated cell discontinuous transmission and/or discontinuous reception (DTX/DRX) pattern instead of applying the subset of cell discontinuous transmission and/or discontinuous reception (DTX/DRX) patterns; and carrying out adaptation to the indicated pattern.

In other words, the pattern-associated indication may indicate to prioritize the indicated cell DTX and/or DRX pattern over the subset of cell DTX and/or DRX patterns. Thus, the UE 100 may stop carrying out the adaptation to the patterns in the subset, and instead carry out adaptation to the indicated cell DTX and/or DRX pattern (e.g., to synchronize communication with the network node 104 according to the indicated pattern).

FIG. 4 illustrates a flow chart of a method. The method may be performed by an apparatus 1000 depicted in FIG. 10. For example, the method may be performed by a network node (e.g., an access node 104 of a radio access network).

The apparatus 1000 or the network node 104 may comprise means for causing the apparatus 1000 or the network node 104 to perform the method. The means may comprise at least one processor 1010; and at least one memory 1020 storing instructions 1022 that, when executed by the at least one processor 1010, cause the apparatus 1000 at least to perform the method.

As another example, there may be provided a computer program or a computer-readable medium (e.g., a non-transitory computer-readable medium) comprising instructions which, when executed by the apparatus 1000 or the network node 104, cause the apparatus 1000 or the network node 104 to perform the method.

Referring to FIG. 4, in block 401, the network node 104 transmits, to a user equipment 100, information for time domain synchronization with the network node 104 in association with cell discontinuous transmission/discontinuous reception (DTX/DRX) pattern activation.

In other words, the network node 104 transmits information for time domain synchronization, wherein the information for the time domain synchronization is associated with cell DTX and/or DRX pattern activation (e.g., associated with activating multiple cell DTX and/or DRX patterns consecutively in a sequence).

In block 402, the network node 104 determines, using a machine learning model (e.g., the machine learning model 600 shown in FIG. 6, or the reinforcement learning model 700 shown in FIG. 7), a subset of cell discontinuous transmission and/or discontinuous reception (DTX/DRX) patterns among a plurality of cell discontinuous transmission and/or discontinuous reception (DTX/DRX) patterns.

The machine learning model may be configured to output the subset in response to input data, wherein the input data may comprise at least one of: a traffic profile for current or predicted data traffic, one or more constraints associated with the data traffic, or one or more monitored performance indicators resulting from one or more previously applied cell discontinuous transmission and/or discontinuous reception (DTX/DRX) patterns.

In block 403, the network node 104 transmits, to the user equipment, an indication for activating the subset of cell discontinuous transmission and/or discontinuous reception (DTX/DRX) patterns among the plurality of cell discontinuous transmission and/or discontinuous reception (DTX/DRX) patterns.

In block 404, the network node 104 activates the subset of cell discontinuous transmission and/or discontinuous reception (DTX/DRX) patterns according to the information for time domain synchronization. The subset of patterns may be activated consecutively (one at a time) according to a certain order or sequence. The activation of a given cell DTX and/or DRX pattern may mean that the network node 104 applies the active (ON) period 212 and the non-active (OFF) period 213 according to the DTX/DRX cycle 211 of that pattern. For example, network node 104 may adapt control signalling and/or data signalling with the network node 104 to active (ON) periods of the network node 104 according to the indication.

The method may further comprise: receiving, from the user equipment 100, a message comprising information on radio resource management related measurements, wherein the message is received during a cell discontinuous reception active (ON) period of at least one pattern in the subset; and monitoring operation of the network (e.g., the cell controlled by the network node 104) for defining a second subset of cell discontinuous transmission and/or discontinuous reception (DTX/DRX) patterns.

Alternatively, or additionally, the method may further comprise: transmitting, to the user equipment 100, a pattern-associated indication of a switch to an indicated cell discontinuous transmission and/or discontinuous reception (DTX/DRX) pattern instead of applying the subset of discontinuous transmission and/or discontinuous reception (DTX/DRX) patterns; and activating the indicated cell discontinuous transmission and/or discontinuous reception (DTX/DRX) pattern for replacing an activated pattern of the subset of cell discontinuous transmission and/or discontinuous reception (DTX/DRX) patterns.

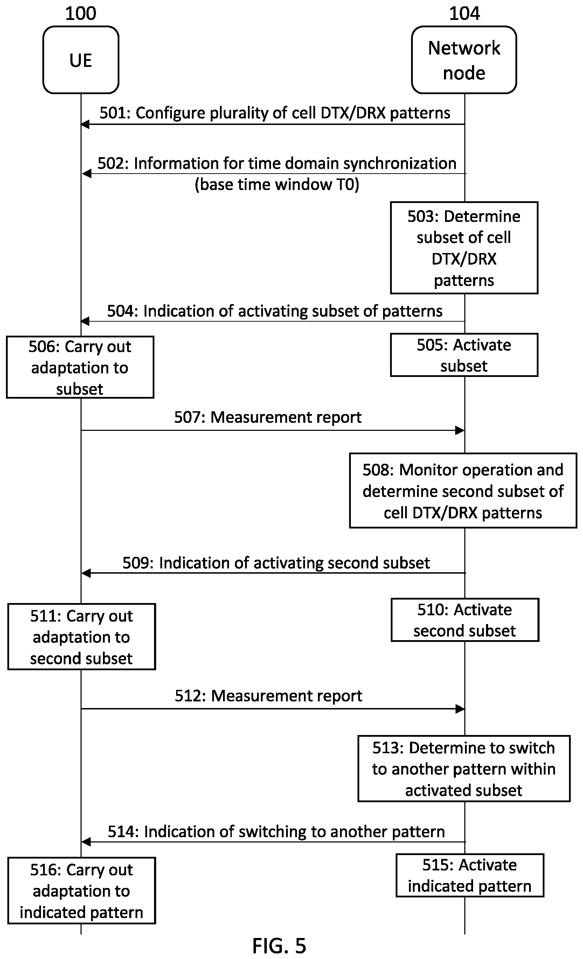

FIG. 5 illustrates a signal flow diagram. Referring to FIG. 5, at 501, a network node (e.g., an access node 104 of a radio access network) transmits, to a UE 100, a configuration (e.g., an RRC configuration) of a plurality of cell DTX and/or DRX patterns (the number of patterns in this configuration may be denoted as N). The UE 100 receives the configuration. In other words, the plurality of cell DTX and/or DRX patterns may be pre-configured to the UE 100. In the configuration, each pattern of the plurality of cell DTX and/or DRX patterns may be associated with a corresponding index value.

The configuration may include the characteristics of each pattern of the plurality of cell DTX and/or DRX patterns, such as at least one of: a cell DTX/DRX active period (or on-duration) 212, a cell DTX/DRX non-active period (or off-duration) 213, or a duration of a cell DTX/DRX cycle 211.

At 502, the network node 104 transmits, to the UE 100, information for time domain synchronization with the network node 104 in association with cell DTX and/or DRX pattern activation. The UE 100 receives the information. The network node 104 may transmit the information based on or in response to determining to enable the ML-based pattern activation and switching feature. For example, depending on the network conditions and inputs, the network node 104 may determine T0 as the base time window used for the pattern activation, and indicate the base time window to the UE 100, so that the UE 100 is synchronized with the network node 104 for the ML functionality.

At 503, the network node 104 determines, using a machine learning model 600 (e.g., see FIG. 6), a subset of cell DTX and/or DRX patterns (where the size of the subset is denoted as K1) among the plurality of cell DTX and/or DRX patterns (which were configured to the UE 100 at 501). The subset may also be referred to as a tuple of patterns.

The number of patterns in the subset may be pre-defined (e.g., pre-configured to the UE 100), or it may be dynamic depending on the network conditions. For example, following an uncertainty metric, the value of K1 (i.e., the number of patterns in the subset) may be an output of the machine learning model 600. Alternatively, the number of patterns in the subset may be time-varying and implicitly indicated to the UE 100.

The machine learning model 600 may be configured to output the subset in response to input data, the input data comprising at least one of: a traffic profile for current or predicted data traffic, one or more constraints associated with the data traffic, or one or more monitored performance indicators resulting from one or more previously applied cell DTX and/or DRX patterns. The one or more monitored performance indicators may be associated with the performance of the UE 100 and/or the network.

At 504, the network node 104 transmits, to the UE 100, an indication for activating the subset of cell DTX and/or DRX patterns among the plurality of cell DTX and/or DRX patterns. For example, the subset may comprise two or more cell DTX and/or DRX patterns to be activated consecutively (one at a time) in a row or sequence. The indication may be transmitted in one or more fields of a DCI message, for example. As an example, the indication may comprise an index value corresponding to the subset of cell DTX and/or DRX patterns among the plurality of (pre-configured) cell DTX and/or DRX patterns. The UE 100 receives the indication.

The indication may further indicate to enable the ML-based cell DTX and/or DRX pattern switching feature. In this way, the network node 104 may enable or disable the ML-based pattern switching and indicate it to the UE 100 along with the ML-related configuration parameters (e.g., K1, T0) in order to have the UE 100 synchronized with the network node 104. For example, enabling the ML functionality and indicating it to the UE 100 may allow the UE 100 to read the related DCI signaling fields that may be re-purposed and adapted for the ML functionality.

The indication of activating the subset of cell DTX and/or DRX patterns may further comprise information on one or more activation periods 251, 252, 253 of at least one pattern in the subset (e.g., the time duration of each pattern may be dynamically indicated along with the corresponding pattern). Alternatively, the information on the one or more activation periods may be a part of the configuration of the plurality of cell DTX and/or DRX patterns received by the UE 100 at 501 prior to receiving the indication of activating the subset (i.e., the time duration of each pattern may be pre-configured to the UE 100).

An activation period (e.g., see the activation periods 251, 252, 253 in FIG. 2D) refers to the length of time during which a given cell DTX and/or DRX pattern remains activated. The pattern may be activated at the start of the activation period. At the end of the activation period, the pattern may be deactivated (and the next pattern may be activated to start its respective activation period). The activation period of a given pattern should not be confused with the active period Tₒₙ (on-duration) 212, 222 of the cell DTX/DRX cycle 211, 221 of that pattern. The activation period is longer than the active period. For example, the activation period 251, 252 may be multiple times longer than the cell DTX/DRX cycle duration 211, 221 (which consists of the active period 212, 222 and the non-active period 213, 223).

For example, a given activation period may be an integer multiplication (integer coefficient) of the base time window T0 (which may be configured to the UE 100 at 501). In this case, the dynamic indication may comprise the integer coefficient. As an example, if the integer coefficient is 1, it means that the pattern is activated for T0 milliseconds. As another example, if the integer coefficient is 3, then the pattern is to be activated for 3*T0 milliseconds.

In another option, the duration of the activation period may be one out of M time durations that may be pre-configured to the UE 100 (e.g., at 501). In this case, the dynamic signaling may comprise an index corresponding to one of the M time durations.

The network node 104 may implicitly or explicitly indicate a repetition of the subset (or tuple) of cell DTX and/or DRX patterns. For example, the network node 104 may use one-bit DCI signaling to indicate the UE 100 to repeat the latest subset of patterns.

As another example, the information on the one or more activation periods may further comprise information on a repetition cycle duration (denoted as Ttot) of the subset of cell DTX/DRX patterns (e.g., as explained above with reference to FIG. 3). For example, (P1,T1), (P2,T2) may be repeated in a row for a time duration of Ttot, where P1 denotes a first pattern in the subset, T1 denotes the activation period (time duration) of the first pattern, P2 denotes a second pattern in the subset, and T2 denotes an activation period (time duration) of the second pattern. For example, the repetition cycle duration (Ttot) may be indicated by an index referring to a specific time duration from a table of time durations that may be pre-configured to the UE 100 (e.g., at 501). As another example, the repetition cycle duration (Ttot) may be an integer multiplication (integer coefficient) of the total time of the subset of patterns (e.g., T1+T2), and the integer coefficient may be indicated to the UE 100. For example, if the integer coefficient is 3, then Ttot = 3*(T1+T2).

Alternatively, the UE 100 may be pre-configured with one or more repetition rules. For example, the one or more repetition rules may define that if the UE 100 does not receive any new indication of another pattern or subset of cell DTX and/or DRX patterns before the latest subset or sequence is completed (i.e., before the activation period of the last pattern in the subset has expired), then the UE 100 may repeat the latest subset or sequence until the UE 100 receives the new indication.

At 505, the network node 104 activates the subset of cell DTX and/or DRX patterns according to the information for time domain synchronization. The network node 104 may activate the patterns in the subset consecutively (one by one) according to a sequence, which may be indicated to the UE 100 in the indication of 504. The network node 104 may activate the subset of cell DTX and/or DRX patterns according to the one or more activation periods, such that the network node 104 may keep a given pattern of the subset activated for a time duration defined by the activation period of the given pattern.

At 506, the UE 100 carries out adaptation to the patterns in the subset according to the indication (while the patterns in the subset are activated at the network node 104), wherein the one or more activation periods 251, 252, 253 of at least one pattern in the subset are monitored using the information for time domain synchronization.

For example, the adaptation may comprise adapting control signalling and/or data signalling with the network node 104 to active (ON) periods of the network node 104 according to the indication.

The monitoring of the one or more activation periods 251, 252, 253 may further comprise monitoring a start time and/or a duration of the one or more activation periods by utilizing at least one local timer adjusted by using the information for time domain synchronization. The subset or the indication of activating the subset may indicate the duration of the one or more activation periods.

For example, for the activation of multiple (two or more) DTX/DRX patterns in a row (or sequence), the UE 100 may measure the duration of each pattern via the at least one local timer to be synchronized with the network node 104 for the next pattern(s). In this manner, the UE 100 may adapt to the next pattern in the subset after the time duration (activation period) of the current pattern ends.

At 507, the UE 100 carries out radio resource management (RRM) related measurements (e.g., on a cell controlled by the network node 104), and transmits, to the network node 104, a message (e.g., an RRC measurement report) comprising information on the measurements for the network node 104 to monitor operation of the network for defining a second subset of cell DTX and/or DRX patterns. The message may be transmitted during a cell DRX active (ON) period of at least one pattern in the subset. The network node 104 receives the message during the cell DRX active (ON) period of the at least one pattern in the subset.

The RRM measurements may comprise performance-related metrics collected by the UE 100 to assess the quality and conditions of the cell controlled by the network node 104 (e.g., the serving cell of the UE 100). For example, the RRM measurements may comprise at least one of: signal strength measurements, signal quality measurements, or interference level measurements.

At 508, the network node 104 monitors operation of the network (e.g., the operation of the cell controlled by the network node 104) based on the message (measurement report). Based on the monitoring, the network node 104 determines or defines a second subset of cell DTX and/or DRX patterns (where the size of the second subset is denoted as K2) among the plurality of cell DTX and/or DRX patterns by using the machine learning model 600. The second subset may be different from the subset determined at 503.

For example, the network node 104 may monitor one or more of the following performance indicators resulting from the first subset determined at 503: energy consumption at the network node 104, user perceived throughput, latency, or coverage. The one or more monitored performance indicators resulting from the first subset may be provided as input to the machine learning model 600 for outputting the second subset.

In other words, if the performance associated with the ML output (i.e., the first subset) is not satisfactory, then the network node 104 may attempt to obtain a new output (i.e., the second subset) from the ML model 600 with updated input data (i.e., keep following the ML-based activation or switching with the updated input), and apply the new ML output (i.e., the second subset).

The network node 104 may evaluate the reason why the output from the ML model 600 is not satisfactory in terms of performance. If the unsatisfactory performance was due to outdated input and/or network conditions, the network node 104 may keep the ML model 600 enabled and obtain the new output from the ML model 600.

At 509, the network node 104 transmits, to the UE 100, a second indication for activating the second subset of cell DTX and/or DRX patterns among the plurality of cell DTX and/or DRX patterns. In other words, the second indication indicates to replace the first subset of patterns with the second subset of patterns to take into account the changed network conditions, for example. The UE 100 receives the second indication.

The second indication may further comprise information on one or more activation periods of at least one pattern in the second subset. Alternatively, the information on the one or more activation periods may be a part of the configuration of the plurality of cell DTX and/or DRX patterns received by the UE 100 at 501 (prior to receiving the second indication).

The information on the one or more activation periods may further comprise information on a repetition cycle duration of the second subset of cell DTX/DRX patterns.

At 510, the network node 104 activates the second subset of cell DTX and/or DRX patterns according to the information for time domain synchronization. The network node 104 may activate the patterns in the second subset consecutively (one by one) according to a sequence, which may be indicated to the UE 100 in the second indication of 509.

At 511, the UE 100 carries out adaptation to the patterns in the second subset according to the second indication (while the patterns in the second subset are activated at the network node 104), wherein the one or more activation periods of the at least one pattern in the second subset are monitored using the information for time domain synchronization.

For example, the adaptation of 511 may comprise adapting control signalling and/or data signalling with the network node 104 to active (ON) periods of the network node 104 according to the second indication.

At 512, the UE 100 carries out RRM related measurements (e.g., on the cell controlled by the network node 104), and transmits, to the network node 104, a second message (e.g., a second RRC measurement report) comprising information on the measurements obtained at 512 for the network node 104 to monitor operation of the network. The second message may be transmitted during a cell DRX active (ON) period of at least one pattern in the second subset. The network node 104 receives the second message during the cell DRX active (ON) period of the at least one pattern in the second subset.

At 513, based on the second message (second measurement report), the network node 104 determines to switch to another cell DTX and/or DRX pattern, while the second subset of cell DTX and/or DRX patterns (or one of the patterns of the second subset) is activated. The other cell DTX and/or DRX pattern may be comprised in the second subset of cell DTX and/or DRX patterns. For example, if the second subset comprises patterns P1, P2, P3, and pattern P3 is currently active, then the other cell DTX and/or DRX pattern may comprise pattern P1 for replacing pattern P3. Alternatively, the other cell DTX and/or DRX pattern may be different from the patterns comprised in the second subset of cell DTX and/or DRX patterns.

For example, the network node 104 may determine to switch to the other cell DTX and/or DRX pattern, if the second message indicates that the performance is not satisfactory (or indicates a performance degradation in the one or more performance indicators). In other words, at least one of the one or more monitored performance indicators resulting from the second subset may not be satisfactory (e.g., the energy consumption may be above an energy consumption threshold, or the throughput may be below a throughput threshold, or the latency may be above a latency threshold).

As another example, the network node 104 may monitor a different traffic profile or constraints that were inputted to the machine learning model 600. Therefore, based on the actual network conditions, the network node 104 may determine to interrupt the ML-based functionality by activating the other cell DTX and/or DRX pattern. The other cell DTX and/or DRX pattern may be a pre-defined pattern that is not outputted by the machine learning model 600. In this way, the network node 104 may protect or improve the performance of the network and/or UE 100 based on the actual network conditions and real-time monitoring.

The network node 104 may evaluate the reason why the output from the ML model 600 is not satisfactory in terms of performance. If the unsatisfactory performance was due to the ML model 600, then the ML model 600 may be disabled, and the network node 104 may determine to switch to the other cell DTX and/or DRX pattern.

At 514, the network node 104 transmits, to the UE 100, a pattern-associated indication of a switch to an indicated cell DTX and/or DRX pattern (i.e., to the other pattern determined at 513) instead of applying the second subset of cell DTX and/or DRX patterns (or instead of applying the currently active pattern of the second subset). The pattern-associated indication may indicate to disable the ML-based pattern switching. For example, the pattern-associated indication may be transmitted in a DCI message. The UE 100 receives the pattern-associated indication.

At 515, the network node 104 deactivates the currently active pattern of the second subset and activates the indicated cell DTX and/or DRX pattern.

At 516, the UE 100 carries out adaptation to the indicated cell DTX and/or DRX pattern (while the indicated pattern is activated at the network node 104). In other words, the UE 100 prioritizes the indicated pattern, and hence the UE 100 stops the adaptation to the current ML-based pattern (from the second subset) and adapts to the indicated pattern.

The pattern-associated indication may also be referred to as interruption signaling. As long as the network node 104 does not disable the ML model (or the ML-based pattern switching) through a dedicated signaling, the UE 100 may follow the ML-based activation, and the interruption signaling may only impact the currently activated pattern in the second subset. For example, if the second subset (or sequence) comprises patterns P1, P3, P2, and the UE 100 receives the pattern-associated indication to switch to a different pattern (e.g., P1) when P3 is activated, then only P3 would be replaced with P1 (hence, no impact on the third pattern P2, so the pattern P2 would be activated after the second instance of P1).

If the number of times that the ML-based pattern switching has been interrupted in this way (i.e., the number of interruption signaling occurrences) exceeds a pre-defined threshold, then the UE 100 may interpret this as disabling the ML-based pattern switching, and the UE 100 may then fall back to legacy DCI-based pattern switching (in which case the UE 100 may receive a separate DCI indication from the network node 104 each time when the cell DTX and/or DRX pattern is switched). Similarly, the network node 104 may disable the ML-based pattern switching, if the number of interruption signaling occurrences (number of pattern-associated indications) exceeds the pre-defined threshold.

FIG. 6 illustrates an example of a machine learning model 600, which may be used to determine the subset of cell DTX and/or DRX patterns (e.g., in block 402, 503, and/or 508).

The machine learning model 600 may be configured to output the subset of cell DTX and/or DRX patterns 620 (one or more cell DTX and/or DRX patterns) to be activated among the plurality of (pre-configured) cell DTX and/or DRX patterns 613 in response to input data 611, 612. The input data 611, 612 may comprise at least one of: a traffic profile 611 for current or predicted data traffic, one or more constraints 612 associated with the data traffic, or one or more monitored performance indicators resulting from one or more previously applied cell DTX and/or DRX patterns.

The machine learning model 600 may also optimize the activation period of each pattern based on the (history of) the network status (and/or prediction of certain inputs such as traffic load).

The traffic profile 611 may comprise, for example, at least one of: a type of the data traffic (e.g., video streaming, voice over internet protocol, internet of things data, etc.), one or more quality of service parameters to be applied to the data traffic, or an expected data volume associated with the data traffic (i.e., the expected amount of data in uplink and/or downlink).

The type of the data traffic refers to the category or nature of the data being transmitted, such as video streaming, voice over internet protocol (VoIP), or internet of things (loT) data. Each type may have different characteristics and requirements. For example, video streaming may require high bandwidth and low latency, while loT data may involve small, infrequent transmissions.

The QoS parameters are performance metrics or requirements that need to be met for a given type of data traffic. For example, the one or more QoS parameters may comprise at least one of: a latency requirement, a jitter requirement, a packet loss requirement, and/or a throughput requirement. The QoS parameters ensure that the network meets the service expectations for different applications, such as ensuring smooth video playback or clear voice calls.

The expected data volume refers to the anticipated amount of data to be transmitted in either the uplink (from the UE 100 to the network node 104) or downlink (from the network 104 to the UE 100). This helps the network allocate resources efficiently and choose appropriate DTX/DRX patterns to balance performance and energy savings.

The one or more constraints 612 may comprise, for example, at least one of: a limit on a size of traffic bursts associated with the data traffic, a maximum data rate for the data traffic, or a latency constraint associated with the data traffic.

The one or more monitored performance indicators may comprise, for example, at least one of: energy consumption (or energy saving gain) of the network node 104, user perceived throughput (e.g., downlink and/or uplink throughput experienced by the user equipment 100), latency of the data traffic between the network node 104 and the user equipment 100, or coverage of a cell controlled by the network node 104 (wherein the cell may be the serving cell of the user equipment 100). The network node 104 may continuously monitor the one or more performance indicators and provide feedback to the ML model for refinements of the output decisions.

For example, based on individual performance indicators, the machine learning model 600 may be configured with an objective to maximize energy saving gain (at the network node 104) subject to the one or more constraints, such as: latency increase below a first target threshold (e.g., below 10 %), and user perceived throughput (UPT) loss below a second target threshold (e.g., below 10 %). Energy saving gain may refer to the amount of achieved reduction in power consumption (or in energy consumption).

As an example, the machine learning model 600 may be a reinforcement learning model (e.g., see FIG. 7), or any other type of machine learning model. The reward function of the reinforcement learning model may comprise at least an effect of energy saving gain or energy consumption, and the one or more monitored performance indicators.

The effect of energy saving gain refers to the positive impact that reduced energy consumption has on the overall performance or reward calculated by the reinforcement learning model. The reinforcement learning model may use the reward function to evaluate how good a particular action (like selecting a certain DTX/DRX pattern) is. If the action leads to energy savings-for example, by keeping the network node or UE in a low-power state longer-then this contributes positively to the reward, representing an energy saving gain. Thus, the effect refers to how much the energy saving contributes to the reward value, influencing the model to prefer actions that are more energy-efficient, as long as they also satisfy other performance criteria (e.g., in terms of latency and/or throughput).

FIG. 7 illustrates an example of the reinforcement learning (RL) model 700, which may be used to determine the subset of cell DTX and/or DRX patterns (e.g., in block 402, 503, and/or 508). The components of the reinforcement learning model 700 are described in the following.

The agent 701 is the decision-making entity that interacts with the environment 702. The agent 701 is responsible for observing the state 703 of the environment 702, selecting actions 704, and receiving feedback in the form of rewards 705 or penalties. For example, the network node 104 may be the agent 701.

The environment 702 represents the external system with which the agent 701 interacts. For example, the environment 702 may represent the cellular network and its dynamics, including user activities, traffic patterns, and network conditions. In this case, the environment 702 may comprise at least one of: the cellular network infrastructure, one or more connected devices (e.g., one or more UEs 100, 102), the traffic generated by the one or more connected devices, the configured energy-saving patterns (e.g., the plurality of cell DTX and/or DRX patterns), and/or performance metrics. The environment 702 may track these metrics to provide feedback 705 to the agent 701 about the consequences of its decisions.

A state 703 is a representation of the environment 702 at a particular point in time. The state 703 captures the relevant information needed for decision-making. States can be fully observable, partially observable, or unobservable depending on the information available to the agent 701. For example, the states 703 may comprise at least one of: current or predicted traffic load, energy consumption status (of the network node 104), historical patterns of energy-saving activations (e.g., cell DTX and/or DRX pattern activations) and their outcomes, and/or a combination of traffic volume and energy consumption metrics to capture the trade-off between network performance and energy usage.

The actions 704 are the choices made by the agent 701 to influence the environment 702. The set of possible actions available to the agent 701 depends on the specific environment. For example, herein the actions may comprise selecting and activating a subset of cell DTX and/or DRX patterns from the plurality of (pre-configured) cell DTX and/or DRX patterns available for selection.

The reward 705 is the feedback signal provided by the environment 702 to the agent 701 after taking an action 704 in a particular state 703. The reward 705 represents the immediate benefit or cost associated with the action 704. For example, the reward 705 may comprise achieved energy savings and/or penalties for degradation of the one or more monitored performance indicators (e.g., UPT and/or latency). As an example, the reward may be defined as follows: $reward = {a}_{0} {f}_{0} \left(EC\right) + {a}_{1} {f}_{1} \left({KPI}_{1}\right) + ⋯ + {a}_{N} {f}_{N} \left({KPI}_{N}\right) ; {a}_{i} ∈ \left[0, 1\right]$ $\sum {a}_{i} = 1 ;$ ${f}_{i} ∈ \left[0, 1\right]$

where EC is energy consumption, *fᵢ* is a function such as Sigmoid to scale the argument in order to have balanced impact of each metric in the reward, and *aᵢ* is the weight of each metric to define which performance indicators are prioritized.

As another example, the reward may be defined as follows based on energy consumption (EC) and user perceived throughput (UPT): $reward = ρf \left(EC\right) + \left(1-ρ\right) g \left(UPT\right) ; ρ ∈ \left[0, 1\right]$ $f \left(EC\right) = 1 - \frac{1}{1 + {e}^{- a \left(EC-{EC}_{0}\right)}}$ $g \left(UPT\right) = \frac{1}{1 + {e}^{- b \left(UPT-{UPT}_{0}\right)}}$ $f , g ∈ \left[0, 1\right]$

where UPT is considered as target performance indicator to be protected (i.e., to prevent it from degrading too much), while minimizing the energy consumption. In the above equation, EC0 and UPTO are constants to shift the values of EC and UPT, respectively, for harmonized impact to the reward function. a and b are parameters that scale the f and g in the x-axis.

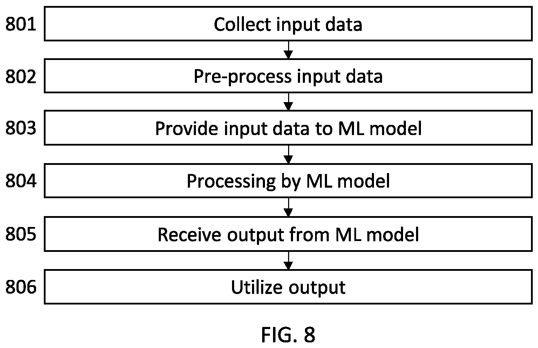

FIG. 8 illustrates a flow chart of a method for using the machine learning model 600, 700 to determine the subset of cell DTX and/or DRX patterns (e.g., in block 402, 503, and/or 508). The method may be performed by an apparatus 1000 depicted in FIG. 10. For example, the method may be performed by a network node (e.g., an access node 104 of a radio access network).

Referring to FIG. 8, in block 801, the input data to be provided to the machine learning model 600, 700 is collected. For example, the input data may comprise at least one of: traffic load (current and/or predicted future traffic), traffic types, latency and throughput requirements or constraints of the traffic types, and one or more performance indicators (e.g., energy saving, UPT, etc.). In case of the RL model 700, no labeled data is required. The RL agent 701 located at the network node 104 may collect the input data through interactions with the environment that forms the so-called RL state, and the reward computed using the performance indicator(s) and energy consumption (see the above equation).

In block 802, the input data is pre-processed prior to providing it to the machine learning model 600, 700. For example, the input data (i.e., features) may be scaled appropriately to have numerical feature vectors, in which each of the features have the same order of numbers to avoid issues related to convergence, etc. (e.g., scaling data to have zero mean and unit variance for each feature). Domain knowledge or statistical techniques may be applied to select relevant features and to reduce the feature dimension, if needed. In RL, the state space may be shaped using all relevant features that describe the environment at any point in time (e.g., the ones listed for block 801).

In block 803, the input data is provided or inputted to the machine learning model 600, 700 (after the pre-processing). For example, the inputs of the reinforcement learning model 700 may comprise the observation of the environment (state), the action space, the reward, and the action that resulted in that reward.

In block 804, the machine learning model 600, 700 processes the input data provided to the machine learning model 600, 700. For example, the reinforcement learning model (e.g., a contextual bandit algorithm or any other type of RL algorithm) may update the reward estimator based on the input pair of (action, actual reward), take the state, and form the context vector based on the state defined above. Then the reinforcement learning algorithm may estimate the reward of all possible actions using the context vector. Then the agent may apply an exploration/exploitation policy to select the action that provides the highest estimated reward, or select a random action.

In block 805, output is received from the machine learning model 600, 700 in response to the input data. For example, the output of the RL model 700 may be the selected action that determines the subset of cell DTX and/or DRX patterns to be activated.

In block 806, the output is utilized (e.g., activated and indicated to the UE 100). The network node 104 now knows the subset of cell DTX and/or DRX patterns to be activated and acts accordingly. The network node 104 indicates the subset to the UE 100 (e.g., via DCI signaling) and activates the subset of patterns to adapt the transmission and/or reception activities according to the activated pattern.

The blocks, related functions, and information exchanges (messages) described above by means of FIGS. 3 to 5 and 8 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

FIG. 9 illustrates an example of an apparatus 900. For example, the apparatus 900 may be an apparatus such as, or comprising, or comprised in, a user equipment (UE) 100, 102.

The apparatus 900 may comprise a circuitry or a chipset applicable for realizing any of the exemplified functionalities of the apparatus 900 (e.g., UE 100) described above (e.g., with respect to FIG. 3 and/or FIG. 5). For example, the apparatus 900 may comprise at least one processor 910. The at least one processor 910 interprets instructions (e.g., computer program instructions) and processes data. The at least one processor 910 may comprise one or more programmable processors. The at least one processor 910 may comprise programmable hardware with embedded firmware and may, alternatively or additionally, comprise one or more application-specific integrated circuits (ASICs).

The at least one processor 910 is coupled to at least one memory 920. The at least one processor is configured to read and write data to and from the at least one memory 920. The at least one memory 920 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 920 stores computer readable instructions that are executed by the at least one processor 910 to perform one or more functionalities of the apparatus 900 (e.g., UE 100) described above (e.g., with respect to FIG. 3 and/or FIG. 5). For example, non-volatile memory stores the computer readable instructions, and the at least one processor 910 executes the instructions using volatile memory for temporary storage of data and/or instructions. The computer readable instructions may refer to computer program code.

The computer readable instructions may have been pre-stored to the at least one memory 920 or, alternatively or additionally, they may be received, by the apparatus, via an electromagnetic carrier signal and/or may be copied from a physical entity such as a computer program product. Execution of the computer readable instructions by the at least one processor 910 causes the apparatus 900 to perform one or more of the exemplified functionalities of the apparatus 900 or UE 100 described above. That is, the at least one processor and the at least one memory storing the instructions may provide the means for providing or causing the performance of any of the method(s) and/or block(s) described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 900 may further comprise, or be connected to, an input unit 930. The input unit 930 may comprise one or more interfaces for receiving input. The one or more interfaces may comprise, for example, at least one of: one or more temperature, motion and/or orientation sensors, one or more cameras, one or more accelerometers, one or more microphones, one or more buttons and/or one or more touch detection units. Further, the input unit 930 may comprise an interface to which external devices may connect to.

The apparatus 900 may also comprise an output unit 940. The output unit may comprise or be connected to one or more displays capable of rendering visual content, such as a light emitting diode (LED) display, a liquid crystal display (LCD) and/or a liquid crystal on silicon (LCoS) display. The output unit 940 may further comprise one or more audio outputs. The one or more audio outputs may be for example loudspeakers.

The apparatus 900 further comprises a connectivity unit 950. The connectivity unit 950 enables wireless connectivity to one or more external devices. The connectivity unit 950 comprises at least one transmitter and at least one receiver that may be integrated to the apparatus 900 or that the apparatus 900 may be connected to. The at least one transmitter comprises at least one transmission antenna, and the at least one receiver comprises at least one receiving antenna. The connectivity unit 950 may comprise an integrated circuit or a set of integrated circuits that provide the wireless communication capability for the apparatus 900. Alternatively, the wireless connectivity may be a hardwired application-specific integrated circuit (ASIC). The connectivity unit 950 may provide means for performing at least some of the blocks or functions described above (e.g., transmitting and/or receiving). The connectivity unit 950 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

It is to be noted that the apparatus 900 may further comprise various components not illustrated in FIG. 9. The various components may be hardware components and/or software components.

FIG. 10 illustrates an example of an apparatus 1000. For example, the apparatus 1000 may be an apparatus such as, or comprising, or comprised in, a network node 104 (e.g., gNB) of a radio access network.

The apparatus 1000 may comprise, for example, a circuitry or a chipset applicable for realizing any of the exemplified functionalities of the apparatus 1000 or network node 104 described above (e.g., with respect to FIG. 4 and/or FIG. 5 and/or FIG. 8). The apparatus 1000 may be an electronic device comprising one or more electronic circuitries. The apparatus 1000 may comprise a communication control circuitry 1010 such as at least one processor, and at least one memory 1020 storing instructions 1022 which, when executed by the at least one processor, cause the apparatus 1000 to carry out any of the exemplified functionalities of the apparatus 1000 (e.g., network node 104) described above. Such instructions 1022 may, for example, include computer program code (software). The at least one processor and the at least one memory storing the instructions may provide the means for providing or causing the performance of any of the methods and/or blocks described above.

The processor is coupled to the memory 1020. The processor is configured to read and write data to and from the memory 1020. The memory 1020 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1020 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1020 or, alternatively or additionally, they may be received, by the apparatus, via an electromagnetic carrier signal and/or may be copied from a physical entity such as a computer program product. Execution of the computer readable instructions causes the apparatus 1000 to perform one or more functionalities of the apparatus 1000 or network node 104 described above (e.g., with respect to FIG. 4 and/or FIG. 5 and/or FIG. 8).

The memory 1020 may be implemented using any suitable data storage technology, such as semiconductor-based memory devices, flash memory, magnetic memory devices and systems, optical memory devices and systems, fixed memory and/or removable memory.

The apparatus 1000 may further comprise or be connected to a communication interface 1030, such as a radio unit, comprising hardware and/or software for realizing communication connectivity with one or more wireless communication devices according to one or more communication protocols. The communication interface 1030 comprises at least one transmitter (Tx) and at least one receiver (Rx) that may be integrated to the apparatus 1000 or that the apparatus 1000 may be connected to. The communication interface 1030 may provide means for performing some of the blocks and/or functions described above (e.g., transmitting and receiving). The communication interface 1030 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1030 provides the apparatus with radio communication capabilities to communicate in the wireless communication network. The communication interface may, for example, provide a radio interface to one or more UEs 100, 102. The apparatus 1000 may further comprise or be connected to another interface towards a core network 110, such as the network coordinator apparatus or AMF, and/or to other access nodes of the wireless communication network.

The apparatus 1000 may further comprise a scheduler 1040 that is configured to allocate radio resources. The scheduler 1040 may be configured along with the communication control circuitry 1010 or it may be separately configured.

It is to be noted that the apparatus 1000 may further comprise various components not illustrated in FIG. 10. The various components may be hardware components and/or software components.

As used in this application, the term "circuitry" may refer to one or more or all of the following: a) hardware-only circuit implementations (such as implementations in analog, digital and/or quantum circuitry); and b) combinations of hardware circuit(s) and software, such as (as applicable): i) a combination of analog, digital and/or quantum hardware circuit(s) with software/firmware and ii) any or all portions of hardware processor(s) (including digital and/or quantum processor(s)) with software, and memory(ies) that work together to cause an apparatus, such as a mobile device, computing device, or server, to perform various functions; and c) any or all portions of hardware circuit(s), such as microprocessor(s), processor(s) and/or quantum processor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be understood by a person skilled in the art that, as technology advances, the proposed concept may be implemented in various ways within the scope of the claims. Therefore, all words and expressions should be interpreted broadly, and they are intended to illustrate, not to restrict, the embodiments.

## Claims

1. An apparatus (900) comprising at least one processor (910), and at least one memory (920) storing instructions that, when executed by the at least one processor (910), cause the apparatus (900) at least to:
receive, by a user equipment (100) from a network node (104), information for time domain synchronization with the network node (104) in association with cell discontinuous transmission/discontinuous reception (DTX/DRX) pattern activation;
receive, from the network node (104), an indication of activating a subset of cell discontinuous transmission and/or discontinuous reception (DTX/DRX) patterns (210, 220, 230) among a plurality of cell discontinuous transmission and/or discontinuous reception (DTX/DRX) patterns; and
carry out adaptation to the patterns (210, 220, 230) in the subset according to the indication, wherein one or more activation periods (251, 252, 253) of at least one pattern in the subset are monitored using the information for time domain synchronization.

2. The apparatus (900) according to claim 1, wherein the adaptation comprises adapting control signalling and/or data signalling with the network node (104) to active (ON) periods (211, 221) of the network node (104) according to the indication of activating the subset.

3. The apparatus (900) according to claim 1 or 2, wherein the monitoring of the one or more activation periods (251, 252, 253) further comprises monitoring a start time and/or a duration of the one or more activation periods (251, 252, 253) by utilizing at least one local timer adjusted by using the information for time domain synchronization.

4. The apparatus (900) according to claim 3, wherein the subset or the indication of activating the subset indicates the duration of the one or more activation periods (251, 252, 253).

5. The apparatus (900) according to any preceding claim, wherein the indication of activating the subset of cell discontinuous transmission and/or discontinuous reception (DTX/DRX) patterns (210, 220, 230) further comprises information on the one or more activation periods (251, 252, 253) of the at least one pattern in the subset, or information on the one or more activation periods (251, 252, 253) is a part of a configuration of the plurality of cell discontinuous transmission and/or discontinuous reception (DTX/DRX) patterns received by the user equipment (100) prior to the receiving the indication of activating.

6. The apparatus (900) according to claim 5, wherein the information on the one or more activation periods (251, 252, 253) further comprises information on a repetition cycle duration of the subset of cell discontinuous transmission and/or discontinuous reception (DTX/DRX) patterns (210, 220, 230).

7. The apparatus (900) according to any preceding claim, further comprising causing the apparatus (900) to:
carry out radio resource management related measurements, and
transmit, to the network node (104), a message comprising information on the measurements for the network node (104) to monitor operation of the network for defining a second subset of cell discontinuous transmission and/or discontinuous reception (DTX/DRX) patterns, wherein the message is transmitted during a cell discontinuous reception active (ON) period (211, 221) of at least one pattern in the subset.

8. The apparatus (900) according to any preceding claim, further comprising causing the apparatus (900) to:
receive, from the network node (104), a pattern-associated indication of a switch to an indicated cell discontinuous transmission and/or discontinuous reception (DTX/DRX) pattern (210) instead of applying the subset of cell discontinuous transmission and/or discontinuous reception (DTX/DRX) patterns (210, 220, 230); and
carry out adaptation to the indicated pattern (210).

9. An apparatus (1000) comprising at least one processor (1010), and at least one memory (1020) storing instructions (1022) that, when executed by the at least one processor (1010), cause the apparatus (1000) at least to:
transmit, by a network node (104) to a user equipment (100), information for time domain synchronization with the network node (104) in association with cell discontinuous transmission/discontinuous reception (DTX/DRX) pattern activation;
determine, using a machine learning model (600, 700), a subset of cell discontinuous transmission and/or discontinuous reception (DTX/DRX) patterns (210, 220, 230) among a plurality of cell discontinuous transmission and/or discontinuous reception (DTX/DRX) patterns,
wherein the machine learning model (600, 700) is configured to output the subset in a response to input data, the input data comprising at least one of: a traffic profile for current or predicted data traffic, one or more constraints associated with the data traffic, or one or more monitored performance indicators resulting from one or more previously applied cell discontinuous transmission and/or discontinuous reception (DTX/DRX) patterns;
transmit, to the user equipment (100), an indication for activating the subset of cell discontinuous transmission and/or discontinuous reception (DTX/DRX) patterns (210, 220, 230) among the plurality of cell discontinuous transmission and/or discontinuous reception (DTX/DRX) patterns; and
activate the subset of cell discontinuous transmission and/or discontinuous reception (DTX/DRX) patterns according to the information for time domain synchronization.

10. The apparatus (1000) according to claim 9, further comprising causing the apparatus (1000) to:
receive, from the user equipment (100), a message comprising information on radio resource management related measurements, wherein the message is received during a cell discontinuous reception active (ON) period (211, 221) of at least one pattern in the subset; and
monitor, based on the message, operation of the network for defining a second subset of cell discontinuous transmission and/or discontinuous reception (DTX/DRX) patterns.

11. The apparatus (1000) according to claim 9 or 10, further comprising causing the apparatus (1000) to:
transmit, to the user equipment (100), a pattern-associated indication of a switch to an indicated cell discontinuous transmission and/or discontinuous reception (DTX/DRX) pattern (210) instead of applying the subset of discontinuous transmission and/or discontinuous reception (DTX/DRX) patterns (210, 220, 230); and
activate the indicated cell discontinuous transmission and/or discontinuous reception (DTX/DRX) pattern (210) for replacing an activated pattern (220) of the subset of cell discontinuous transmission and/or discontinuous reception (DTX/DRX) patterns (210, 220, 230).

12. A method comprising:
receiving (301), by a user equipment from a network node (104), information for time domain synchronization with the network node (104) in association with cell discontinuous transmission/discontinuous reception (DTX/DRX) pattern activation;
receiving (302), from the network node (104), an indication of activating a subset of cell discontinuous transmission and/or discontinuous reception (DTX/DRX) patterns among a plurality of cell discontinuous transmission and/or discontinuous reception (DTX/DRX) patterns; and
carrying out (303) adaptation to the patterns in the subset according to the indication, wherein one or more activation periods of at least one pattern in the subset are monitored using the information for time domain synchronization.

13. A method comprising:
transmitting (401), by a network node to a user equipment, information for time domain synchronization with the network node in association with cell discontinuous transmission/discontinuous reception (DTX/DRX) pattern activation;
determining (402), using a machine learning model, a subset of cell discontinuous transmission and/or discontinuous reception (DTX/DRX) patterns among a plurality of cell discontinuous transmission and/or discontinuous reception (DTX/DRX) patterns,
wherein the machine learning model is configured to output the subset in response to a set of input data, the set of input data comprising at least one of: a traffic profile for current or predicted data traffic, one or more constraints associated with the data traffic, or one or more monitored network key performance indicators resulting from one or more previously applied cell discontinuous transmission and/or discontinuous reception (DTX/DRX) patterns;
transmitting (403), to the user equipment, an indication of activating the subset of cell discontinuous transmission and/or discontinuous reception (DTX/DRX) patterns among the plurality of cell discontinuous transmission and/or discontinuous reception (DTX/DRX) patterns; and
activating (404) the subset of cell discontinuous transmission and/or discontinuous reception (DTX/DRX) patterns according to the information for time domain synchronization.

14. A computer program comprising instructions which, when executed by an apparatus (900), cause the apparatus (900) to perform at least the following:
receiving, by a user equipment (100) from a network node (104), information for time domain synchronization with the network node (104) in association with cell discontinuous transmission/discontinuous reception (DTX/DRX) pattern activation;
receiving, from the network node (104), an indication of activating a subset of cell discontinuous transmission and/or discontinuous reception (DTX/DRX) patterns (210, 220, 230) among a plurality of cell discontinuous transmission and/or discontinuous reception (DTX/DRX) patterns; and
carrying out adaptation to the patterns (210, 220, 230) in the subset according to the indication, wherein one or more activation periods (251, 252, 253) of at least one pattern in the subset are monitored using the information for time domain synchronization.

15. A computer program comprising instructions which, when executed by an apparatus (1000), cause the apparatus (1000) to perform at least the following:
transmitting, by a network node (104) to a user equipment (100), information for time domain synchronization with the network node (104) in association with cell discontinuous transmission/discontinuous reception (DTX/DRX) pattern activation;
determining, using a machine learning model (600, 700), a subset of cell discontinuous transmission and/or discontinuous reception (DTX/DRX) patterns (210, 220, 230) among a plurality of cell discontinuous transmission and/or discontinuous reception (DTX/DRX) patterns,
wherein the machine learning model (600, 700) is configured to output the subset in response to a set of input data, the set of input data comprising at least one of: a traffic profile for current or predicted data traffic, one or more constraints associated with the data traffic, or one or more monitored network key performance indicators resulting from one or more previously applied cell discontinuous transmission and/or discontinuous reception (DTX/DRX) patterns;
transmitting, to the user equipment (100), an indication of activating the subset of cell discontinuous transmission and/or discontinuous reception (DTX/DRX) patterns (210, 220, 230) among the plurality of cell discontinuous transmission and/or discontinuous reception (DTX/DRX) patterns; and
activating the subset of cell discontinuous transmission and/or discontinuous reception (DTX/DRX) patterns (210, 220, 230) according to the information for time domain synchronization.
